(19) **Europäisches Patentamt**

**European Patent Office**

**Office européen des brevets**

(11) **EP 1 425 590 B1**

(12) **EUROPÄISCHE PATENTSCHRIFT**

| | |
|---|---|
| (45) Veröffentlichungstag und Bekanntmachung des Hinweises auf die Patenterteilung: **15.11.2006 Patentblatt 2006/46** | (51) Int Cl.: *G01N 35/02* (2006.01) *G01F 23/292* (2006.01) |
| (21) Anmeldenummer: **02797985.5** | (86) Internationale Anmeldenummer: **PCT/EP2002/010232** |
| (22) Anmeldetag: **12.09.2002** | (87) Internationale Veröffentlichungsnummer: **WO 2003/023370 (20.03.2003 Gazette 2003/12)** |

(54) **SYSTEM, VERFAHREN UND COMPUTERPROGRAMM ZUM DURCHFÜHREN VON OPTISCHEN TRANSMISSIONSMESSUNGEN UND ZUM AUSWERTEN ERMITTELTER MESSGRÖSSEN**

SYSTEM, METHOD AND COMPUTER PROGRAM FOR CONDUCTING OPTICAL TRANSMISSION MEASUREMENTS AND EVALUATING DETERMINED MEASURING VARIABLES

SYSTEME, PROCEDE ET PROGRAMME INFORMATIQUE POUR EFFECTUER DES MESURES DE TRANSMISSION OPTIQUE ET POUR INTERPRETER LES VALEURS DE MESURES OBTENUES

| | |
|---|---|
| (84) Benannte Vertragsstaaten: **CH DE FI FR GB LI** | • **BISCHOF, Daniel 8630 Rüti/ZH (CH)** |
| (30) Priorität: **12.09.2001 CH 16812001** | (74) Vertreter: **OK pat AG Chamerstrasse 50 6300 Zug (CH)** |
| (43) Veröffentlichungstag der Anmeldung: **09.06.2004 Patentblatt 2004/24** | |
| (73) Patentinhaber: **Tecan Trading AG 8708 Männedorf (CH)** | (56) Entgegenhaltungen: **US-A- 4 119 860    US-A- 4 260 883 US-A- 4 873 875    US-A- 5 245 292 US-A- 5 463 228    US-B1- 6 235 534** |
| (72) Erfinder: • **BRAENDLE, Hansjörg CH-9244 Niederuzwil (CH)** • **NADLER, Erich CH-8404 Winterthur (CH)** • **GRAETER, Matthias CH-8707 Uetikon a. S. (CH)** | • **PATENT ABSTRACTS OF JAPAN vol. 017, no. 255 (P-1539), 20. Mai 1993 (1993-05-20) & JP 04 372861 A (FUJI PHOTO FILM CO LTD), 25. Dezember 1992 (1992-12-25)** |

**Beschreibung**

Die Erfindung betrifft die Durchführung von optischen Transmissionsmessungen und die Auswertung von Signalen, die dabei bereitgestellt werden. Insbesondere geht es um die automatisierte Durchführung und Auswertung von Transmissionsmessungen an Probenröhrchen.

In Labors, die sich z.B. mit molekularbiologischen/biochemischen Untersuchungen von Seren oder anderen menschlichen, tierischen oder pflanzlichen Körperflüssigkeiten, Sekreten oder Exkrementen befassen, werden die zu untersuchenden Proben oft in einem Probenröhrchen angeliefert. Diese Probenröhrchen sind typischerweise mit einer Etikette versehen, die der Zuordnung der Probe zu dem Individuum dient, von dem die Probe stammt. Üblicherweise enthalten diese Etiketten auch einen computerlesbaren Barcode oder eine sonstige maschinenlesbare Beschriftung.

Schon vor der eigentlichen - oft zeitraubenden - molekularbiologischen/biochemischen Untersuchung werden die Proben voruntersucht, damit schlecht oder nicht weiter zu verarbeitende Proben aussortiert bzw. damit die Proben entsprechend der Weiterverarbeitung sortiert werden können. Diese Voruntersuchung erfolgt üblicherweise an Hand einer Durchstrahlung der Proben mit Licht und soll schnell und automatisch erfolgen. Zu diesem Zweck wird oft darauf geachtet, dass zumindest ein schmaler Streifen entlang der Röhrchen, in weichen sich diese Proben befinden, nicht durch eine Etikette abgedeckt ist, so dass die Proben einfacher durchstrahlbar sind. Es kommt aber oft vor, dass entweder die Etiketten zu gross oder die Röhrchendurchmesser zu klein gewählt werden und darum - wegen des Überlappens der Etikette auf dem Umfang des Probenröhrchens - die Probe von aussen nicht mehr sichtbar ist. Die Aufgabe, auch an solchen "versteckten Proben" eine automatische Voruntersuchung auszuführen, lässt die meisten bekannten Systeme zur voruntersuchenden Durchstrahlung solcher Proben üblicherweise scheitern. Andere Systeme sind sehr teuer und kompliziert.

In einer Patentanmeldung mit dem Titel "Optische Vorrichtung, System und Verwendung", die den gleichen Anmeldetag wie die vorliegenden Patentanmeldung zugewiesen bekommen hat, und die im Namen der selben Patentanmelderin eingereicht wurde, ist ein System beschrieben und beansprucht, das es erlaubt, an den Proben auch dann eine automatische Voruntersuchung auszuführen, wenn die Proben z.B. wegen den Etiketten, die das Probenröhrchen vollständig bedekken, von aussen nicht sichtbar sind. Zu diesem Zweck wurde ein System entwikkelt, dass zwei Lichtquellen aufweist, die Licht unterschiedlicher Wellenlänge im infrarotnahen Bereich aussenden. Zudem umfasst dieses System eine optische Vorrichtung zum Mischen dieses Lichts.

Die erfindungsgemässe Lösung beruht auf der Überlegung, dass z.B. Blutserum sich betreffend der Absorption des Lichtes im infrarotnahen Wellenlängenbereich sehr ähnlich wie Wasser verhält. Somit lässt sich für den Nachweis von Serum das charakteristische Transmissionsverhalten von Wasser ausnutzen. In der Folge werden als Serum bezeichnet: Hämolytisches Serum, lipämisches (fetthaltiges) Serum, bilirubines Serum, Lymphflüssigkeit und Urin, um einige gängige Beispiele zu geben.

Die Transmissionskurven aller phasenbildenden Bestandteile von Blut, also z.B. Serum und Blutkuchen - aber auch die Transmission aller anderen in einem Probenröhrchen anwesenden Stoffe, wie Luft, Glas, Kunststoffdeckel, Gele und Granulate, wurden mittels Durchstrahlung von Blutproben mit Licht in einem Wellenlängenbereich zwischen 950 nm und 1450 nm aufgezeichnet. Zudem wurden diese Messungen wiederholt, die Proben aber mit Barcodestreifen abgedeckt. Im Transmissionsbereich wurden anschliessend zwei Wellenlängenbereiche bestimmt, bei denen eine klare Trennung zwischen "Serum" und "Nicht-Serum" möglich ist. Diese Bereiche liegen für eine erste Lichtquelle zwischen 1200 nm und 1400 nm und für eine zweite Lichtquelle zwischen 1000 nm und 1110 nm. Speziell bevorzugt sind Lichtquellen, bei denen die Wellenlänge des Lichts der ersten Lichtquelle 1250 nm bzw. 1300 nm und die Wellenlänge des Lichts der zweiten Lichtquelle ca. 1070 nm beträgt.

Durch die unterschiedlichen Transmissionswerte der Proben (verursacht durch die Proben selber) und durch die verschiedenen Kombinationen von Etiketten auf den Röhrchen wird ein sehr hoher Verstärkungsbereich des nach dem Durchtritt durch die Probe aufgefangenen Messsignals erforderlich. Erschwerend kommen auf den Etiketten aufgedruckte, ebenfalls zu durchleuchtende Barcodes dazu. Eine Durchleuchtung der Probe am exakt gleichen Ort - also eine in Bezug auf die räumliche Verteilung und die Winkelverteilung identische Probenbeleuchtung mit quasi-örtlicher Kohärenz - mit Licht unterschiedlicher Wellenlänge ist dafür unabdingbar, da durch räumliche Abweichungen das Messergebnis verfälscht würde.

Nachdem das Licht von zwei oder mehreren Leuchtdioden (LEDs) oder Laserdioden (LDs) gleichzeitig und am gleichen Ort die Probe durchstrahlt, werden, die entsprechenden Signale detektiert und einer Auswertung zugeführt. Dabei wird nach dem Messen des Treinsmissionswerte durch das Bilden eines Quotienten der ersten zur zweiten Lichtquelle ein eindeutiger Parameter ermittelt. Dieser Parameter kann dazu verwendet werden eine Aussage über das Vorhandensein von Serum zu treffen.

Die Probe soll gegenüber der Messanordnung, oder die Messanordnung gegenüber der Probe so bewegt werden können, dass eine Folge von Messungen entlang des (normalerweise stehenden) Probenröhrchens und somit ein regelrechtes Abrastern der Probe in feinen Messschritten ermöglicht wird. Die Auswertung muss diese Art der Transmissionsmessung unterstützen.

Aus US 6,235,534 B1 sind eine Vorrichtung und ein Verfahren zum Feststellen von Verunreinigungen In Flüssigkeiten bekannt, die sich In der Pipettenspitze eines Liquid-Handling-Systems befinden. Ein Scanner mit einer Emissionswellenlänge zwischen 630 und 2000 nm und die mit einer Flüssigkeit gefüllte Pipettenspitze werden relativ zu einander bewegt, so dass das die Pipettenspitze durchdringende Licht über die ganze Füllhöhe der Pipettenspitze mit einem Fotodetektor gemessen werden kann. Die aktuellen Messresultate werden mittels einer elektronischen Auswertevorrichtung mit Messresultaten verglichen, die durch das Durchstrahlen einer Luftblasen freien Probe gewonnen wurden. Anschliessend werden die Resultate angezeigt. An der Pipettenspitze hängende Flüssigkeitstropfen können ebenfalls festgestellt werden.

Die Aufgabe der Erfindung besteht darin, ein einfaches, alternatives Verfahren und eine entsprechende Vorrichtung vorzuschlagen, die es erlauben, eine automatische Transmissionsmessung an Proben durchzuführen.

Es ist eine weitere Aufgabe der Erfindung ein Steuerprogramm zum Steuern der Auswertung einer optischen Transmissionsmessung mittels eines Computers oder eines digitalen Signalprozessors (DSP) und ein entsprechendes Computerprogrammprodukt, das in eine Vorrichtung mit Computer oder digitalem Signalprozessor ladbar ist, bereit zu stellen.

Erfindungsgemäss Werden diese Anforderungen durch eine Vorrichtung gemäss dem unabhängigen Anspruch 1 erfüllt.

Erfindungsgemäss werden diese Anforderungen durch das Verfahren gemäss dem unabhängigen Anspruch 10 erfüllt.

Erfindungsgemäss werden diese Anforderungen durch das Computerprogrammprodukt gemäss dem unabhängigen Anspruch 19 erfüllt.

Gemäss Erfindung können Messungen/Untersuchungen mit hoher Reproduzierbarkeit ausgeführt werden. Die Vorrichtung ermöglicht eine schnelle und zuverlässig Funktion, ohne manuellen Eingriff. Das Erkennen "Serum" bzw. "Nicht Serum" ermöglicht eine Automatisierung/Vereinfachung zahlreicher Prozesse, z.B. im Labor oder Klinikbereich.

Weitere Vorteile der Erfindung ergeben sich aus der nachfolgenden Beschreibung.

Die folgenden schematischen Zeichnungen sollen bevorzugte Ausführungsformen der erfindungsgemässen Vorrichtung bzw. des erfindungsgemässen Systems erläutern, ohne dass sie den Umfang der Erfindung einschränken sollen. Dabei zeigen:

Fig. 1   einen Längsschnitt durch einen runden Mischblock;

Fig. 2   einen Längsschnitt durch einen andersartigen Mischblock;

Fig. 3   eine Übersichtsdarstellung der Lichtleiter von den Lichtquellen bis zur Beleuchtungsfläche, gemäss der ersten Ausführungsform des Mischblocks;

Fig. 4   einen Vertikalschnitt durch die Probenhalterung und Optik eines ersten Systems zum Durchführen von Transmissionsmessungen an Probenröhrchen;

Fig. 5   einen Vertikalschnitt durch die Probenhalterung und Optik eines zweiten Systems zum Durchführen von Transmissionsmessungen an Mikroplatten;

Fig.6   ein Blockdiagram einer Vorrichtung zum Durchführen einer Transmissionsmessung, gemäss Erfindung;

Fig. 7   ein Blockdiagram eines Computers mit DSP, gemäss Erfindung.

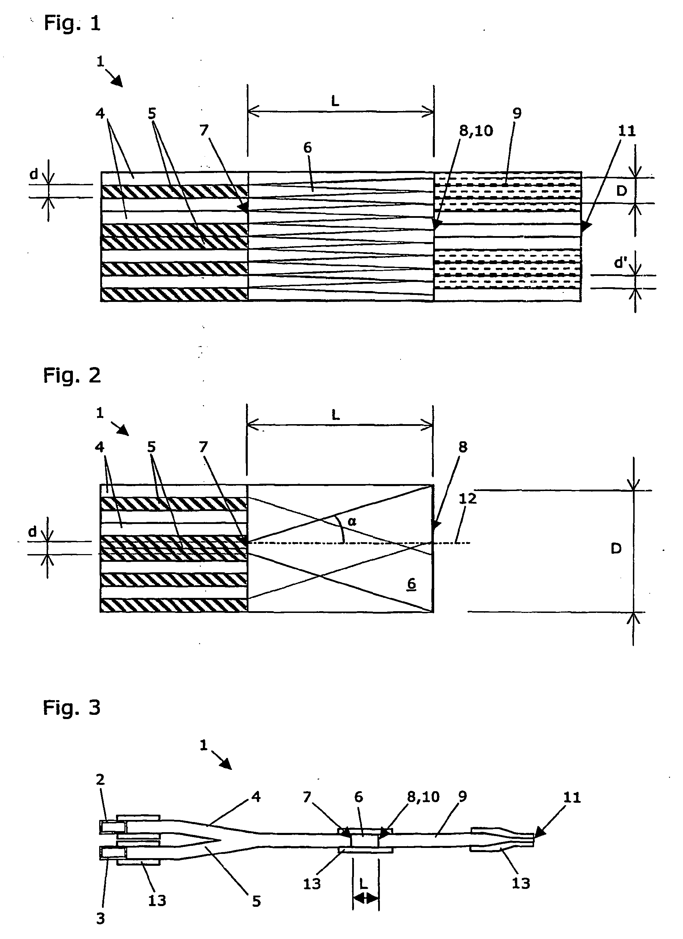

Figur 1 zeigt einen Längsschnitt durch einen runden Mischblock, der zum Einsatz in einer Vorrichtung zum Durchführen einer Transmissionsmessung, gemäss Erfindung, geeignet ist. Dieser Mischblock ist Teil einer optischen Vorrichtung 1 zum Mischen von Licht unterschiedlicher Wellenlänge. Diese Vorrichtung 1 ist an zumindest zwei Lichtquellen 2, 3 anschliessbar, wobei die erste Lichtquelle 2 Licht mit einer ersten Wellenlänge und die zweite Lichtquelle 3 Licht mit einer zweiten bzw. weiteren Wellenlänge aussendet. Die Vorrichtung 1 umfasst ein erstes Lichtleiterfaserbündel 4 zum Leiten des Lichts der ersten Wellenlänge und ein zweites bzw. weiteres Lichtleiterfaserbündel 5 zum Leiten des Lichts der zweiten bzw. weiteren Wellenlänge sowie einen Mischblock 6. Dieser Mischblock 6 weist eine Immissionsfläche 7 und eine Emissionsfläche 8 auf. Die Fasern der Lichtleiterfäserbündel 4, 5 weisen einen Durchmesser (d) auf, sie sind vorzugsweise miteinander statistisch durchmischt und - durch eine möglichst dichte Packung - im Wesentlichen parallel zueinander angeordnet. Zum gleichzeitigen Einspeisen der zwei oder mehr unterschiedlichen Wellenlängen in den Mischblock 6, sind die Lichtleiterfaserbündel 4, 5 an die Immissionsfläche 7 des Mischblocks 6 angeschlossen. Vorzugsweise weisen die Lichtleiterfasern eine im Wesentlichen senkrechte Endfläche auf, welche dann planparallel auf der Immissionsfläche 7 befestigt ist. Besonders bevorzugt ist eine Schraub- oder Steckverbindung, welche einen satten Sitz der Lichtleiterfasern auf der Immissionsfläche garantiert und welche zudem eine lichtdichte Ummantelung der Verbindung bereitstellt. Der Mischblock 6 weist - zum Aufweiten des aus jeder Lichtleiterfaser der Bündel 4, 5 einfallenden Lichtstrahls auf einen Lichtfleck mit einem Durchmesser (D) - mindestens eine optisch wirksame Länge (L) auf. Der Mischblock 6 kann jede beliebige, zum Weiterleiten des einfallenden Lichtes geeignete Form aufweisen und kann deshalb gerade, gebogen bzw. zumindest teilweise gekrümmt mit im Wesentlichen gleichbleibendem oder veränderlichem Querschnitt, aber z.B. auch als Polygon ausgebildet sein.

Beim Eintritt in den Mischblock 6 stimmt der Durchmesser des Lichtstrahls im Wesentlichen mit dem Durchmesser d der Lichtleiterfasern überein. Im Lichtleiterstab weitet sich jeder Lichtstrahl auf, so dass er - nach dem Durchqueren einer bestimmten, optisch wirksamen Mischblocklänge (L) - an der Austritts- oder Emissionsfläche einen Lichtfleck mit dem Durchmesser (D) erzeugt.

Zur Dimensionierung des Mischblocks 6 existieren viele Möglichkeiten, bevorzugt werden Mischblöcke, die keine optischen Linsen oder Spiegel benötigen. Damit können die Herstellungskosten gesenkt werden und zudem wird das Risiko ausgeschaltet, dass sich Linsen bzw. Spiegel - z.B. auf Grund von Vibrationen im System - dejustieren. Zudem wird die Anzahl der Übergangsflächen für jeden Lichtstrahl gesenkt. Ausserdem werden Lösungen bevorzugt, welche die Totalreflexion des Lichtes in den Lichtleitern und im Mischraum bzw. Mischblock ausnützen.

Nimmt man eine dichte, hexagonale Packung und eine optimale Durchmischung der ersten und zweiten Lichtleiterfaserbündel 4, 5 an, so hat jede Faser im Mittel gleich viele gleichfarbige Nachbarn; in der Praxis genügt aber bereits eine gute statistische Durchmischung. In dem Fall, in welchem ein weiteres Faserbündel optimal mit den Lichtleiterfaserbündeln 4, 5 durchmischt ist, hat keine der Lichtleiterfasern einen Nachbarn, der Licht mit der gleichen Wellenlänge leitet.

Figur 2 zeigt einen Längsschnitt durch einen andersartigen Mischblock, der zum Einsatz in einer Vorrichtung zum Durchführen einer Transmissionsmessung, gemäss Erfindung, geeignet ist. Die Durchmischung der Uchtleiterfaserbündel 4, 5 und deren Anschluss am Mischblock 6 entspricht der ersten Ausführungsform in Figur 1. Die Ausführungsform nach Figur 2 weist gegenüber derjenigen in Figur 1 den Vorteil auf, dass auch bei nicht optimal sondern lediglich statistisch durchmischten Lichtleiterfaserbündeln 4, 5 eine genügende Mischlichtqualität resultiert. Durch die Totalreflexion an den Seitenflächen des Mischblocks 6 überstreicht ein aus einer randständigen Lichtleiterfaser stammender, aufgeweiteter Lichtstrahl zumindest die Hälfte der Emissionsfläche 8 (vgl. Figur 2: im Mischblock 6 gepunktet gezeichnete Lichtstrahlen, die aus den randständigen Fasern eintreten).

Figur 2 unterscheidet sich von Figur 1 auch dadurch, dass kein Lichtleiterfaserbündel an der Emissionsfläche 8 des Mischblocks angeschlossen ist. In der ersten Ausführungsform (Figur 1) ist der Mischblock 6 ein runder Lichtleitstab, bei dem Immissionsfläche 7 und Emissionsfläche 8 gleich gross sind und im Wesentlichen dem Stabquerschnitt entsprechen. Das dritte Lichtleiterfaserbündel 9 weist eine im Wesentlichen runde Anfangsfläche 10 und eine Endfläche 11 auf, die im Wesentlichen rechteckig ausgebildet ist. In der zweiten Ausführungsform ist der Mischblock 6 ein Lichtleitstab, bei dem Immissionsfläche 7 und Emissionsfläche 8 im Wesentlichen gleich gross sind, wobei die Immissionsfläche 7 im Wesentlichen rund und die Emissionsfläche 8 im Wesentlichen rechteckig ausgebildet ist. Somit wird der wirksame Lichtquerschnitt in der ersten Ausführungsform mit Hilfe des dritten Lichtleiterfaserbündels 9, in der zweiten Ausführungsform dagegen mit Hilfe des Mischblocks 6 verändert.

Abweichend von den dargestellten Ausführungsformen kann die Form der Immissions- und/oder Emissionsfläche des Mischblocks 6 von einer runden Scheibe abweichen und z.B. oval, vieleckig oder eine Mischform mit geraden und gebogenen Kanten aufweisen. Zudem können die Immissions- und Emissionsflächen einen unterschiedlichen Inhalt aufweisen. Optional kann wie gezeigt auf ein drittes Lichtleiterfaserbündel 9 verzichtet werden.

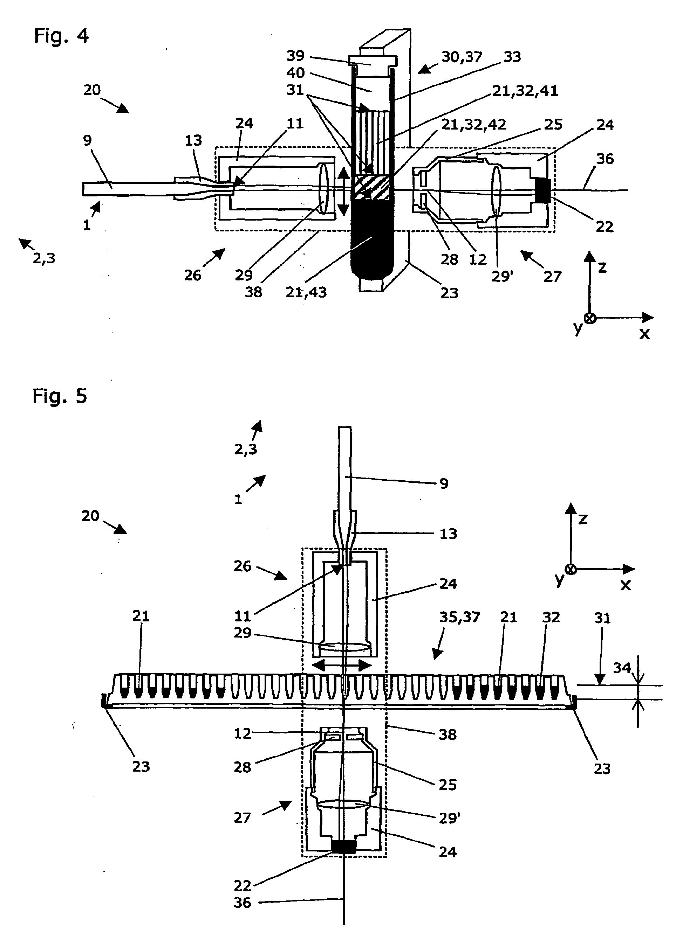

Figur 3 zeigt eine Übersichtsdarstellung der Lichtleiter von den Lichtquellen bis zur Beleuchtungsfläche, gemäss der ersten Ausführungsform des Mischblocks. Die optische Vorrichtung 1 zum Mischen von Licht unterschiedlicher Wellenlänge, ist an zwei Lichtquellen 2, 3 angeschlossen, wobei die erste Lichtquelle 2 Licht mit einer ersten Wellenlänge und die zweite Lichtquelle 3 Licht mit einer zweiten bzw. weiteren Wellenlänge aussendet. Die Vorrichtung 1 umfasst ein erstes Lichtleiterfaserbündel 4 und ein zweites bzw. weiteres Lichtleiterfaserbündel 5 sowie einen Mischblock 6 mit einer Immissionsfläche 7 und einer Emissionsfläche 8. Die Fasern der Lichtleiterfaserbündel 4, 5 sind vorzugsweise miteinander statistisch durchmischt, im Wesentlichen parallel zueinander angeordnet und - zum gleichzeitigen Einspeisen der unterschiedlichen Wellenlängen - an die Immissionsfläche 7 des Mischblocks 6 angeschlossen. Der Mischblock 6 weist - zum Aufweiten des aus jeder Lichtleiterfaser der Bündel 4, 5 einfallenden Lichtstrahls - mindestens eine optisch wirksame Länge L auf. Vorzugsweise sind alle Verbindungen 13, z.B. zu den Lichtquellen 2, 3 und dem Mischblock 6, steck- oder schraubbar und lichtdicht ausgebildet.

Die Eigenschaften des Materials - z.B. Quarzglas, Kunststoff oder andere, für die Leitung von Licht mit einer Wellenlänge von 200 nm bis 1400 nm üblichen Materialien - das für den Mischblock gewählt wird, bestimmen - zusammen mit den gewählten Wellenlängen der ersten, zweiten und weiteren Lichtquellen - die Aufweitung des Lichtstrahls im Mischblock und damit das Mass für die optisch wirksame Länge L des Mischblocks 6 zwischen seiner Immissionsfläche 7 und der Emissionsfläche 8.

Figur 4 zeigt einen Ausschnitt aus einer ersten Vorrichtung 20 zum Durchführen von Transmissionsmessungen durch stark variierende Proben 21. Es handelt sich um einen Vertikalschnitt durch die Probenhalterung und Optik einer Vorrichtung zum Durchführen von Transmissionsmessungen an Probenröhrchen 30. Die beiden Lichtquellen 2, 3, welche Licht mit unterschiedlichen Wellenlängenanteilen im Nahinfrarotbereich (NIR) aussenden, sind nicht gezeigt. Dargestellt ist lediglich das dritte Lichtleiterfaserbündel 9 einer optischen Vorrichtung 1 zum Mischen von Licht unterschiedlicher Wellenlänge. Die Vorrichtung 20 umfasst zudem einen Detektor 22 und einen Probenhalter 23. Zum Einstrahlen von Mischlicht zweier Wellenlängen in eine Probe 21 mit quasi-örtlicher Kohärenz umfasst die Vorrichtung 20 eine Beleuchtungsoptik 26, welche zur Aufnahme der Emissionsfläche 8 des Mischblocks 6 oder (wie abgebildet) zur Aufnahme der Endfläche 11 des dritten Lichtleiterfaserbündels 9 der Vorrichtung 1 ausgebildet ist. Zudem umfasst die Vorrichtung 20 eine Empfangsoptik 27 mit einer Blende 28 - zum Weiterleiten des die Probe 21 hier im Wesentlichen horizontal durchdringenden Lichtes zum Detektor 22. Die beiden Optiken 26, 27 weisen je nach Erfordernis eine oder mehrere Linsen 29, 29' auf, die fest oder entlang der optischen Achse 12 verschiebbar angeordnet sind. Die Blende 28 dient zum Ausfiltern von Streulicht. Vorzugsweise sind die Linsen 29, 29' und der Detektor 22 In je einem lichtdichten Gehäuse 24 angeordnet. Der dritte Lichtleiter 9 mündet dabei in das Gehäuse 24 und ist vorzugsweise daran angeschraubt bzw. dort in einen entsprechenden (nicht dargestellten) Sitz eingesteckt. Die Blende 28 befindet sich ebenfalls in einem lichtdichten Gehäuse 25, das vorzugsweise gegenüber dem Gehäuse 24 für die Linse 29' und den Detektor 22 verschieb- und/oder rotierbar ist, so dass die Blende 28 justiert und auf bestimmte Betriebsbedingungen eingestellt werden kann. Eine Leitung 36 oder ein Bus leitet die vom Detektor erzeugten Signale zu einem später beschriebenen Computer (nicht in Figur 4 gezeigt), wo diese Signale umgewandelt und die entsprechenden Daten gespeichert, verarbeitet und ausgewertet werden.

Die beiden Optiken 26, 27 sind über ein Verbindungselement 38 miteinander verbunden, so dass sie gemeinsam relativ gegenüber den Proben 21 bzw. gegenüber einem Probenröhrchen 30 verschoben werden können (vgl. Doppelpfeil). Zum Abscannen von Probenröhrchen 30 werden bevorzugt die Optiken 26, 27 in Z-Richtung bewegt, wobei die Optiken 26, 27 und/oder der Probenhalter 23 (in Figur 5) bevorzugt in der X- bzw. Y-Richtung eines räumlichen Koordinatensystems ebenfalls bewegbar sind.

Die Wellenlängenantelle des Lichts der ersten Lichtquelle 2 liegen bevorzugt zwischen 1200 nm und 1400 nm und diejenigen der zweite Lichtquelle 3 liegen bevorzugt zwischen 1000 nm und 1110 nm. Besonders bevorzugt beträgt die Wellenlänge des Lichts der ersten Lichtquelle 1250 nm bzw. 1300 nm und die Wellenlänge des Lichts der zweiten Lichtquelle 1070 nm.

Das Probenröhrchen 30 enthält hier feste Probenteile, wie Blutkuchen 43, flüssige Probenteile 32, wie lipämisches Serum 42 und Serum 41, sowie Granulate oder Trenngel und Gase, wie z.B. Luft 40. Das Probenröhrchen 30 weist eine Wandung 33 aus (z.B. aus Quarzglas) und einen Stopfen 39 (z.B. aus Plastik oder Gummi) auf. Alle diese Materialien und auch deren Phasengrenzen 31 werden von der Detektion in der Vorrichtung 20 als "Serum" oder "Nicht-Serum" erkannt und identifiziert.

Die Etikette mit dem Barcode ist nicht dargestellt. Es ist aber allgemein üblich, dass die einzelnen Barcodestreifen bei einem im Wesentlichen senkrecht im Probenhalter 23 der Vorrichtung 20 gehaltenen Probenröhrchen 30 etwa in horizontaler Richtung verlaufen und dass der Barcode somit in im Wesentlichen vertikaler Richtung abgelesen werden kann. Das Einstrahlen von Licht mit quasi-örtlicher Kohärenz verhindert, dass die Barcodestreifen auf der Etikette und/oder die Phasengrenzen innerhalb der Probe die Messresultate einer der gewählten Wellenlängen beinträchtigen können.

Es ist bekannt, dass die Konzentration einer Substanz, welche Licht absorbiert und die optische Absorption einer diese Substanz enthaltenden Flüssigkeit über das Lambert-Beer'sche Gesetz verknüpft sind. Dieses Lambert-Beer'sche Gesetz lautet:

$$A = c * \varepsilon * l = \log \frac{I_0}{I} \tag{4,}$$

dabei gilt:

A = gemessene optische Absorption
c = Konzentration des gelösten Stoffes [M = Mol/L]
$\varepsilon$ = molarer Extinktionskoeffizient des gelösten Stoffes [1 / (M * cm)]
l = Schichtdicke der Flüssigkeit, die das Licht durchlaufen muss (Weglänge [cm])
$I_0$ = Intensität der Probenbeleuchtung
I = Intensität des aus der Probe austretenden Lichts

Für eine direkte Berechung der Konzentration einer Substanz ist - insbesondere beim vertikalen Durchstrahlen von Mikroplatten (in Figur 5), in deren Wells sich die Proben befinden - die Bestimmung der Weglänge unumgänglich. Weil in den meisten biologischen Anwendungen das Lösungsmittel Wasser ist und Wasser ein Absorptionsmaximum bei 977 nm aufweist, kann die Absorption von Wasser durch das Verwenden einer Beleuchtung im Nahinfrarotbereich (NIR: 750-2500 nm) ausgenützt werden. Allerdings hängt die Absorption von Wasser bei 977 nm von der Probentemperatur ab, so dass deswegen oft auf den isobestischen Punkt des Wassers ausgewichen und die Absorption bei etwa 998 nm und damit unabhängig von der Probentemperatur gemessen wird. Unter Berücksichtigung der Basisabsorption von Wasser bei 900 nm und ausgehend von diesem Lambert-Beer'schen Gesetz kann auf die Weglänge und die Konzentration der Substanz in der Probe zurückgerechnet werden, indem die Probe mit Licht der entsprechenden Wellenlängen durchstrahlt und die Absorption gemessen wird.

Bevorzugt ist Licht mit 998 nm Wellenlänge (spezifische Absorption von Wasser), Licht mit 900 nm Wellenlänge (Basisabsorption von Wasser) und Licht mit z.B. 280 nm (spezifische Absorption von Proteinen) bzw. 260 nm (spezifische Absorption von Nukleinsäuren).

Figur 5 zeigt einen Vertikalschnitt durch die Probenhalterung und Optik einer zweiten Vorrichtung zum Durchführen von Transmissionsmessungen an Mikroplatten. Eine Mikroplatte 35 ist in bzw. auf einen, vorzugsweise als Rahmen ausgebildeten, Objekttisch oder Probenhalter 23 gelegt. Die Wells der hier beispielsweise 96 Wells aufweisenden Mikroplatte sind zumindest teilweise mit Proben 21 gefüllt. Die Füllhöhe 34 kann dabei, wie gezeigt, grössere Unterschiede aufweisen; auch geringe Unterschiede in der Füllhöhe können aus den verschiedensten Gründen auftreten. Die beiden Lichtquellen 2, 3, welche Licht mit unterschiedlichen Wellenlängenanteilen im Nahinfrarotbereich (NIR) aussenden und eine dritte Lichtquelle welche Licht bevorzugt in einem Bereich von 200 bis 400 nm aussendet sowie allfällig notwendige Monochromatoren bzw. Wellenlängenfilter sind hier nicht gezeigt. Dargestellt ist lediglich das dritte Lichtleiterfaserbündel 9 einer optischen Vorrichtung 1 zum Mischen von Licht unterschiedlicher Wellenlänge. Das System 20 umfasst zudem einen Detektor 22. Zum Einstrahlen von Mischlicht zweier Wellenlängen in eine Probe 21 mit quasi-örtlicher Kohärenz umfasst das System 20 eine Beleuchtungsoptik 26, welche zur Aufnahme der Emissionsfläche 8 des Mischblocks 6 oder (wie abgebildet) zur Aufnahme der Endfläche 11 des dritten Lichtleiterfaserbündels 9 der Vorrichtung 1 ausgebildet ist. Zudem umfasst das System 20 eine Empfangsoptik 2.7 mit einer Blende 28 - zum Weiterleiten des die Probe 21 hier im Wesentlichen vertikal durchdringenden Lichtes zum Detektor 22. Die beiden Optiken 26, 27 weisen je nach Erfordernis eine oder mehrere Linsen 29, 29' auf, die fest oder entlang der optischen Achse 12 verschiebbar angeordnet sind. Die Blende 28 dient zum Ausfiltern von Streulicht. Vorzugsweise sind die Linsen 29, 29' und der Detektor 22 in je einem lichtdichten Gehäuse 24 angeordnet. Der dritte Lichtleiter 9 mündet dabei in das, Gehäuse 24 und ist vorzugsweise daran angeschraubt bzw. dort in einen entsprechenden (nicht dargestellten) Sitz eingesteckt. Die Blende 28 befindet sich ebenfalls in einem lichtdichten Gehäuse 25, das vorzugsweise gegenüber dem Gehäuse 24 für die Linse 29' und den Detektor 22 verschieb- und/oder rotierbar ist, so dass die Blende 28 justiert und auf bestimmte Betriebsbedingungen eingestellt werden kann. Eine Leitung 36 oder ein Bus leitet die vom Detektor erzeugten Signale zu einem hier nicht dargestellten Computer, wo diese Signale umgewandelt und die entsprechenden Daten gespeichert, verarbeitet und ausgewertet werden. Die Auswertung der Messdaten erfolgt nach dem Gesetz von Lambert-Beer. Das Einstrahlen von Licht mit quasi-örtlicher Kohärenz ermöglicht die Durchstrahlung der Proben am exakt gleichen Ort, so dass das Licht jeder Wellenlänge genau die gleiche Weglänge 1 durch die Proben zurücklegen muss.

Die beiden Optiken 26, 27 sind über ein Verbindungselement 38 miteinander verbunden, so dass sie gemeinsam relativ gegenüber den Proben 21 bzw. gegenüber einer Mikroplatte 35 verschoben werden können (vgl. Doppelpfeil). Zum Abscannen von mit Flüssigkeit 32 zumindest teilweise gefüllten Mikroplatten 35 können die Optiken 26, 27 in X- bzw. Y-Richtung bewegt werden, wobei die Optiken 26,27 und/oder Objekttisch bzw. Probenhalter 23 bevorzugt in der Z-Richtung eines räumlichen Koordinatensystems ebenfalls bewegbar sind. Vorzugsweise ist jedoch vorgesehen, dass die Mikroplatte 35 gegenüber den beiden, ruhig gehaltenen Optiken 26,27 bewegt wird; in diesem Fall kann auf ein Verbindungselement 38 verzichtet werden. Besonders bevorzugt sind Probenhalter 23 und Optiken 26, 27 je in X-, Y- und Z-Richtung beweglich bzw. einstellbar ausgebildet.

Die Wellenlängenanteile des Lichts der ersten Lichtquelle 2 liegen hier bevorzugt zwischen 900 nm und 1100 nm und diejenigen der zweite Lichtquelle 3 liegen hier bevorzugt zwischen 800 nm und 1000 nm. Besonders bevorzugt beträgt die Wellenlänge des Lichts der ersten Lichtquelle 998 nm und die Wellenlänge des Lichts der zweiten Lichtquelle 900 nm. Die Wellenlänge des Lichts der dritten Lichtquelle liegt bevorzugt in einem Bereich zwischen 200 nm und 1000 nm, besonders bevorzugt werden Wellenlängen von 260 nm bzw. 280 nm.

Die gesamte Auswertung oder ein Teil der Auswertung der Signale, die z.B. über die Leitungen 36 oder über einen Bus geliefert werden, kann durch einen Mikroprozessor, vorzugsweise einen digitalen Signalprozessor (DSP genannt) durchgeführt werden, der ein Steuerprogramm abarbeitet. Die Auswertung kann aber auch mittels eines konventionellen Computers durchgeführt werden, der gewissen Anpassungen unterzogen wurde. Der Computer muss so ausgestattet werden, dass er in der Lage ist analogen Signale zu digitalisieren. Dann erst erfolgen die Auswertungsschritte, bei denen die Quotienten gebildet und je nach Anwendung die erste und die zweite Ableitung ermittelt wird. Zu diesem Zweck muss der Computer Zugriff auf ein spezielles Steuerprogramm haben, dass den Ablauf der Auswertung vorgibt.

Steuerprogramm ist ein Begriff, der im vorliegenden Zusammenhang als Synonym für ein Computerprogramm, egal in welcher Programmier- oder Maschinensprache, oder einen Befehlssatz, der dazu geeignet ist einen Computer oder ein DSP so zu steuern/kontrollieren, dass er die gewünschten Auswertungsschritte, zum Beispiel gemäss einem vorgegebenen Flussdiagramm, ausführt.

Das Ausführen der Auswertungsschritt kann entweder unmittelbar erfolgen, oder es kann vorher oder während der Auswertung eine Umwandlung des Steuerprogramms in eine Notation erfolgen, die durch den Computer oder DSP verarbeitbar ist.

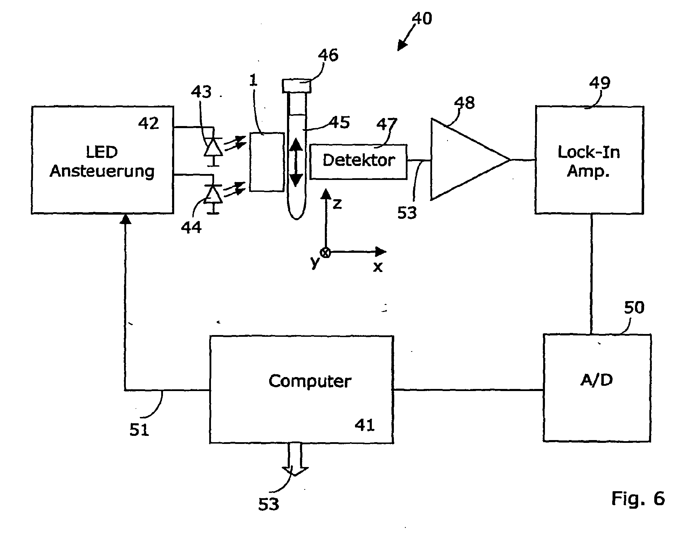

Eine erste Vorrichtung 40 zum Durchführen einer Transmissionsmessung ist in Figur 6 gezeigt. Die Vorrichtung 40 ist in Form eines schematischen Blockdiagrams dargestellt, wobei nur die wesentlichsten Komponenten und Verbindungen gezeigt sind. Es sei angemerkt, dass ein Teil der Verbindung bidirektional sein kann. Andere Verbindungen können mehrere Leitungen oder Kanäle aufweisen. Die Vorrichtung 40 umfasst ein System 42, 43, 44 zum Erzeugen einer Lichtwelle, die einen ersten und einen zweiten Wellenlängenanteile umfasst. Im der gezeigten Ausführungsform umfasst das System zum Erzeugen einer Lichtwelle eine LED Ansteuerung 42, die von einem Computer 41 über eine mehrkanalige Verbindung 51 kontrolliert wird.

Die LED Ansteuerung kann zum Beispiel einen Digital/Analog Wandler zum Umwandeln digitaler Signale in analoge Signale und eine Treiberstufe (z.B. FET Endstufen) zum Bereitstellen zweier Ströme umfassen, die den Leuchtdioden (LEDs) 43 und 44 zugeführt werden. Werden die LEDs 43, 44 über die Ströme angesteuert, so senden sie eine Lichtwelle aus, die einen ersten und einen zweiten Wellenlängenanteil haben. Es ist zum Beispiel denkbar, dass der Computer die beiden LEDs 43, 44 gezielt an bzw. abschalten kann. Die Lichtwelle wird über eine optische Vorrichtung 1 zum Mischen von Licht unterschiedlicher Wellenlänge in Richtung eines Probenröhrchens 45 mit Deckel oder Stopfen 46 geführt. Besonders geeignet sind optische Vorrichtungen, wie in den Figuren 1 - 5 gezeigt. In Figur 6 ist die optische Vorrichtung 1 schematisch als ein einziger Block gezeigt. Die optische Vorrichtung 1 stellt einen optischen Kanal bereit, der die Lichtwelle so zu dem Probenröhrchen 45 mit Probe hinführt, dass die Lichtwelle das Probenröhrchen 45 mit Probe durchdringt.

Es ist eine Bewegungseinheit vorgesehen (nicht in Figur 6 gezeigt), die eine relative Bewegung parallel zur Z-Achse zwischen der Lichtwelle entlang des Probenröhrchens 45 erzeugt. Die Bewegungseinheit kann zum Beispiel zusätzlich eine Rotationsbewegung des Probenröhrchens 45 um die Längsachse des Röhrchens 45 (parallel zur Z-Achse) erzeugen, damit das Röhrchen 45 von verschiedenen Seiten untersucht werden kann. Die Bewegungseinheit kann durch den Computer 41 gesteuert werden.

Auf der gegenüberliegenden Seite des Probenröhrchens 45 ist ein Detektor 47 (Empfänger) zum Empfangen des ersten und des zweiten Wellenlängenanteils angeordnet. Der Detektor 47 kann mit einer Optik ausgerüstet sein, wie sie zum Beispiel in einer der Figuren 4 oder 5 gezeigt ist. Der Detektor kann zum Beispiel eine oder mehrere Photodioden aufweisen. Diese Photodioden können zum Beispiel durch den Computer 41 umgeschaltet werden, so dass entweder eine erste und/oder eine zweite Photodiode zum Einsatz kommt. Gut geeignet sind InGaAs Photodioden.

In der gezeigten Ausführungsform werden die Ausgangssignale des Detektors 47 an einen Vorverstärker 48 übergeben, der wiederum mit einem Lock-In Verstärker 49 in Verbindung steht. Ein solcher Vorverstärker wird vorzugsweise dann eingesetzt, wenn die Lichtsignale nach dem Durchdringen des Probenröhrchens stark abgeschwächt worden sind. Der Vorverstärker kann ein umschaltbarer Vorverstärker sein, dessen Verstärkungsfaktor zum Beispiel zwischen $10^3$ und $10^8$ über den Computer 41 einstellbar ist. Durch die Umschaltbarkeit des Verstärkungsfaktors können zum Beispiel Intensitätsschwankungen der Lichtwelle am Eingang des Detektors 47 ausgeglichen werden. Es ist eine Aufgabe des Vorverstärkers 48 den Photodiodenstrom des Detektors 47 (moduliertes Summensignal des LEDs 43 und 44) In eine für den Lock-In Verstärker 49 brauchbare Eingangsspannung zu wandeln und zu verstärken. Der Lock-In Verstärker 49 erlaubt ein Trennen des ersten und des zweiten Wellenlängenanteils mittels Demodulation und/oder Filterung. Zusätzlich kann der Lock-In Verstärker 49 eine Signalverstärkung durchführen. Hierzu ist ein Verstärkungsfaktor zwischen 100 und 500 geeignet. Vorzugsweise handelt es sich um eine Dual Phase Lock-In Verstärker.

Dem Lock-In Verstärker 49 ist ein Analog/Digital Wandler 50 nachgeschaltet. Der Analog/Digital Wandler 50 kann zum Beispiel eine Auflösung von 12 Bit haben. Dieser Wandler 50 wandelt den ersten Wellenlängenanteil in erste digitale Messwerte (X) um, die den Transmissionsgrad bei der ersten Wellenlänge beschreiben, und de zweiten Wellenlängenanteil in zweite digitale Messwerte (Y), die den Transmissionsgrad bei der zweiten Wellenlänge beschreiben. Die ersten und zweiten digitalen Messwerte (X, Y) werden einem Auswertesystem übergeben, das im gezeigten Beispiel in Form eines Computer 41 realisiert ist. Das Auswertesystem bildet einen Quotienten aus den ersten digitalen Messwerten (X) und den zweiten digitale Messwerten (Y), und ermittelt die erste Ableitung des Quotienten. Vorzugsweise wir die Ableitung nach dem Ort gebildet.

Vorzugsweise wird der Lock-In Verstärker 49 über einen X-Kanal und über einen Y-Kanal mit dem Analog/Digital Wandler 50 verbunden.

Vorzugsweise ist die Vorrichtung 40 so ausgelegt, dass das Auswertesystem (Computer 41) anhand der ersten Ableitung die Position einer Grenzfläche innerhalb der Probe in dem Probenröhrchen 45 ermitteln kann. Zusätzlich kann die Grenzfläche ermittelt werden, indem ein erster und ein zweiter Nulldurchgang der ersten Ableitung und der Nulldurchgang der zweiten Ableitung, der zwischen den Nulldurchgängen der ersten Ableitung liegt, ausgewertet werden. Es sei hier angemerkt, dass man im Prinzip die Grenzfläche alleine mit Hilfe der ersten Ableitung ermitteln kann. Die beschriebene Lösung, bei der man auch die zweite Ableitung verwendet ist jedoch genauer.

Vorzugsweise ist die Vorrichtung 40 so ausgelegt, dass das Auswertesystem (Computer 41) die zweite Ableitung des Quotienten ermitteln kann. Dadurch kann das Auswertesystem anhand der zweiten Ableitung den Füllstand der Probe in dem Probenröhrchen 45 ermitteln.

Gemäss einer weiteren Ausführungsform der Vorrichtung 40 ist der Füllstand ermittelbar, indem die zweite Ableitung ausgewertet wird, um den Punkt der ersten Ableitung zu ermitteln, bei dem die erste Ableitung ein absolutes Minimum annimmt.

Vorzugsweise umfasst die LED Ansteuerung 42 einen Modulator, der den ersten Wellenlängenanteil und den zweiten Wellenlängenanteil moduliert, um eine Lichtwelle zu erzeugen, die dann über eine optische Vorrichtung 1 dem Probenröhrchen zugeführt wird.

Bei den LEDs 43 und 44 handelt es sich vorzugsweise um LEDs, die Licht mit infrarotnahen Wellenlängen aussenden. Die Wellenlängenanteile des Lichts der ersten Lichtquelle 43 liegen bevorzugt zwischen 1200 nm und 1400 nm und diejenigen der zweite Lichtquelle 44 liegen bevorzugt zwischen 1000 nm und 1110 nm. Besonders bevorzugt beträgt die Wellenlänge des Lichts der ersten Lichtquelle 1250 nm bzw. 1300 nm und die Wellenlänge des Lichts der zweiten Lichtquelle 1070 nm.

Die LEDS 43, 44 können entweder bei gleicher Frequenz (z.B. bei 3kHz) mit 90° Phasenverschiebung (Modus 1) oder bei unterschiedlichen Frequenzen (z.B. 3kHz und 1.5 kHz) ohne Phasenverschiebung (Modus 2) betrieben werden. Die LEDs 43, 44 werden zum Beispiel mit Rechtecksignalen betrieben.

Im Modus 1 wird der Lock-In Verstärker als echter Dual Kanal Lock-In Verstärker mit den beiden Frequenzen (z.B. 3kHz und 1.5 kHz) betrieben. Im Modus 2 dagegen wird der Lock-In Verstärker als Dual Kanal Lock-In Verstärker mit einer Frequenz betrieben, die aber um 90° phasenverschoben sind.

Vorzugsweise umfasst das Auswertesystem einen digitalen Signalprozessor (DSP). Dieser DSP kann zum Beispiel in den Computer integriert oder in diesem mittels einer Steckkarte eingesteckt werden.

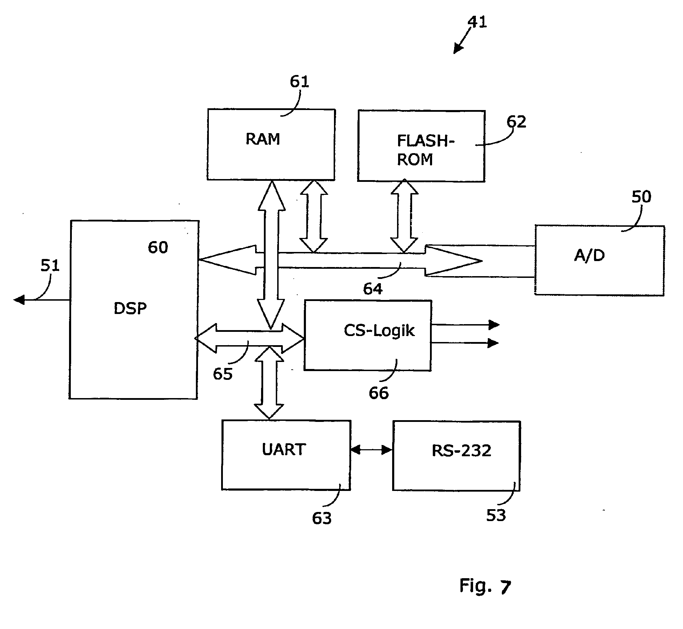

Details eines Computers 41 mit DSP 60 sind in Figur 7 gezeigt. Es handelt sich hierbei um eine beispielhafte, schematische Darstellung. Der DSP 60 steht über einen Adressbus 65 und einen Datenbus 64 mit den verschiedenen Elementen des Computers 41 in Verbindung. Es ist ein FLASH-ROM 62 vorhanden, in dem das Steuerprogramm und eventuell andere vorgegebene Daten bzw. Parameter abgespeichert sind. Zusätzlich ist ein konventioneller RAM 61 vorhanden. Es wird eine Chip-Select (CS)-Logik 66 eingesetzt, um externe Bausteine der Vorrichtung 40 zu aktivieren. Zwischen dem DSP und der Verbindung 51 zu der LED Ansteuerung 42 können RC-Glieder vorgesehen werden (nicht in Figur 7 gezeigt), um Störspitzen eliminieren zu können. Es ist ein Universal Asynchron Receiver/transmitter (UART)-Baustein 63 vorhanden, um die serielle RS-232 Schnittstelle 53 zu verwalten. Der A/D Wandler 50 der Vorrichtung 40 wird von extern mit dem Datenbus 64 verbunden, wie durch die gestrichelten Linien angedeutet wird.

Das Auswertesystem kann so ausgelegt sein, dass die ersten digitalen Messwerte (X) und die zweiten digitale Messwerte (Y) eingelesen, abspeichert und auswertet werden können. Das Auswertesystem kann zusätzlich einen Speicher zum Speichern des Steuercodes umfasst, der zum Steuern des digitalen Signalprozessors (DSP) dient. Vorzugsweise ist der Computer 41 mit einem Businterface (z.B. in Form einer RS-232-Schnittstelle) ausgelegt.

In einer speziellen Ausführungsform übernimmt der DSP zum Beispiel die folgenden Funktionen und Kontrollaufgaben:

- Modulation der LEDS 43, 44;
- Einlesen der digitalen Messsignale (X, Y);
- Umschaltung des Verstärkungsfaktors des Vorverstärkers 48;
- eventuell Einlesen eines Overloadbits (im Falle eine Übersteuerung kann dies angezeigt werden, um dann den Verstärkungsfaktor herunter zu setzen) vom Vorverstärker 48;
- Berechnung des Separationsniveaus und/oder des Füllstandes;
- Bestimmung des Kappentyps 46;
- während eines Messzyklus Ansteuerung der Motoren für Bewegung parallel zur Z-Achse;
- Kommunikation mit einem anderen System, z.B. einem Mastersystem;
- Umschaltung zwischen verschiedenen Photodioden des Detektors 47.

Das Verfahren gemäss Erfindung umfasst mindestens die folgenden Schritte:

- Erzeugen einer Lichtwelle, die einen ersten und einen zweiten Wellenlängenanteil umfasst,
- Durchleuchten eines mit einer Probe gefüllten Probenröhrchens mit der Lichtwelle während eine relative Bewegung der Lichtwelle entlang des Probenröhrchens ausgeführt wird,
- Empfangen des ersten und zweiten Wellenlängenanteils (als Summensignal) nachdem die Lichtwelle das Probenröhrchen mit Probe durchdrungen hat,
- Trennen des ersten und des zweiten Wellenlängenanteils,
- Umwandeln des ersten Wellenlängenanteils in erste digitale Messwerte (X), die den Transmissionsgrad bei der ersten Wellenlänge beschreiben,
- Umwandeln des zweiten Wellenlängenanteils in zweite digitale Messwerte (Y), die den Transmissionsgrad bei der zweiten Wellenlänge beschreiben,
- Bilden der Quotienten aus den ersten digitalen Messwerten (X) und den zweiten digitalen Messwerten (Y), und
- Ermitteln der ersten Ableitung der Quotienten.

Gemäss Erfindung kann man die Position einer Grenzfläche innerhalb der Probe in dem Probenröhrchen ermitteln, indem man die erste Ableitung des Quotienten bildet und auswertet. Des weiteren kann man gemäss Erfindung die Grenzfläche ermitteln, indem ein erster und ein zweiter Nulldurchgang der ersten Ableitung ausgewertet wird. In eine Ausführungsform der Erfindung kann die Position der Grenzfläche ausgegeben werden, wobei dies vorzugsweise auf einem Bildschirm oder einem Drucker geschieht.

Der Füllstandes der Probe in dem Probenröhrchen kann gemäss Erfindung ermittelt werden, indem man die zweiten Ableitung bildet und auswertet. In eine Ausführungsform der Erfindung kann Füllstand ausgegeben werden, wobei dies vorzugsweise auf einem Bildschirm oder einem Drucker geschieht.

Beim Ermitteln der ersten Ableitung wird vorzugsweise ein Suchfenster definiert, um einen Teil der Quotienten von der Ermittlung der ersten Ableitung auszuschliessen und damit den Prozess schneller bzw. weniger Rechenzeit intensiv zu gestalten.

Die Anwendung der Erfindung ist nicht auf Probenröhrchen beschränkt. Sie kann auch im Zusammenhang mit anderen Probenbehältern eingesetzt werden.

Beliebige Kombinationen der gezeigten und/oder beschriebenen Ausführungsformen gehören zum Umfang der vorliegenden Erfindung, auch wenn diese Kombinationen nicht explizit dargestellt sind. Die Bezugszeichen in allen Figuren bezeichnen jeweils dieselben Elemente, auch wenn diese im Einzelnen nicht immer erläutert sind.

**Patentansprüche**

1. Vorrichtung zum Durchführen von Transmissionsmessungen an Probenbehältern (30,35,45), welche ein Lichtsystem (42,43,44) mit einem optischen Kanal (9) zum Erzeugen und Leiten einer Lichtwelle, eine Bewegungseinheit zum relativen Bewegen von Probenbehältern und optischem Kanal (9) zueinander, einen Detektor (22,47) zum Erfassen des die Probenbehälter durchdringenden Uchtes und ein Auswertesystem (41) zum Auswerten der Messresultate umfasst, **dadurch gekennzeichnet, dass** das Lichtsystem (42,43,44) zwei Lichtquellen und eine optische Vorrichtung (4,5) zum Mischen und Einspeisen dieses Uchts mit einem ersten und einem zweiten Wellenlängenanteil in den optischen Kanal (9) umfasst, wobei der Detektor (22,27) als Empfänger zum Messen und Trennen des ersten und des zweiten Wellenlängenanteils der Lichtwelle, welche den Probenbehälter (30,35,45) mit Probe (21) am gleichen Ort durchdrungen haben, einen Analog/Digital-Wandler (50) zum Umwandeln des ersten und zweiten Wellenlängenanteils in erste und zweite digitale Messwerte (X,Y), die den Transmissionsgrad bei der ersten und zweiten Wellenlänge beschreiben, umfasst, und wobei das Auswertesystem (41) einen Quotienten aus den ersten und zweiten digitalen Messwerten (X,Y) und die erste Ableitung dieses Quotienten bildet, wobei die entsprechenden Messgrössen (X) und (Y) ortsabhängig bei der Relativbewegung zwischen Probenbehältern (30,35,45) und optischem Kanal (9) ermittelt werden, so dass die Ableitung des Quotienten nach der entsprechenden Ortskoordinate so erfolgt, dass diese Vorrichtung die Position einer Grenzfläche zwischen zwei Phasen oder Dichtebereichen einer Probe oder den Füllstand in einem Probenbehälter ermittelt.

2. Vorrichtung nach Anspruch 1, **dadurch gekennzeichnet, dass** das Lichtsystem (42,43,44) zwei Leuchtdioden und einen Modulator umfasst, der den ersten wellenlängenanteil und den zweiten Wellenlängenanteil moduliert, um die Lichtwelle zu erzeugen.

3. Vorrichtung nach Anspruch 2, **dadurch gekennzeichnet, dass** die Leuchtdioden Licht im infrarotnahen Wellenlängenbereich aussenden.

4. Vorrichtung nach einem der vorhergehenden Ansprüche, **dadurch gekennzeichnet, dass** eine erste Lichtquelle Licht mit einer Wellenlänge zwischen 1200 nm und 1400 nm und eine zweite Lichtquelle Licht mit einer Wellenlänge zwischen 1000 nm und 1110 nm aussendet.

5. Vorrichtung nach Anspruch 4, **dadurch gekennzeichnet, dass** die Wellenlänge des Lichts der ersten Lichtquelle 1250 nm bzw. 1300 nm und die Wellenlänge des Uchts der zweiten Lichtquelle ca. 1070 nm beträgt.

6. Vorrichtung nach einem der vorhergehenden Ansprüche, **dadurch gekennzeichnet, dass** der, Empfänger einen Vorverstärker mit verstellbarem Verstärkungsfaktor umfasst, vorzugsweise mit Anbindung an das Auswertesystem.

7. Vorrichtung nach einem der vorhergehenden Ansprüche, **dadurch gekennzeichnet, dass** der Empfänger einen Lock-In Verstärker zum Trennen des ersten und des zweiten Wellenlängenanteils mittels Demodulation und/oder zur Filterung aufweist.

8. Vorrichtung nach einem der vorhergehenden Ansprüche, **dadurch gekennzeichnet, dass** das Auswertesystem (41) einen digitalen Signalprozessor (DSP) und einen Speicher zum Speichern eines Steuercodes umfasst, der zum Steuern des digitalen Signalprozessors (DSP) dient.

9. Vorrichtung nach einem der vorhergehenden Ansprüche, **dadurch gekennzeichnet, dass** das Auswertesystem (41) die ersten digitalen Messwerte (X) und die zweiten digitale Messwerte (Y) einliest, abspeichert und auswertet.

10. Verfahren zum Charakterisieren einer probe mit einer Vorrichtung zum Durchführen von Transmissionsmessungen an Probenbehältern (30,35,45), welche ein Lichtsystem (42,43,44) mit einem optischen Kanal (9) zum Erzeugen und Leiten einer Lichtwelle, eine Bewegungseinheit zum relativen Bewegen von Probenbehältern und optischem Kanal (9) zueinander, einen Detektor (22,47) zum Erfassen des die Probenbehälter durchdringenden Lichtes und ein Auswertesystem (41) zum Auswerten der Messresultate umfasst, **dadurch gekennzeichnet, dass,** ein Probenbehälter (30,35,45) mit Probe (21) mit einer Lichtwelle, die einen ersten und einen zweiten Wellenlängenanteil umfasst, durchstrahlt wird, indem in zwei Lichtquellen des Lichtsystems (42,43,44) die Wellenlängenanteile erzeugt und in einer optischen Vorrichtung (4,5) dieses Licht mit einer ersten und einer zweiten Wellenlänge gemischt und in den optischen Kanal (9) eingespeist wird, indem der Detektor (22,27) den ersten und zweiten Wellenlängenanteil der Lichtwelle, welche den Probenbehälter (30,35,45) mit Probe (21) am gleichen Ort durchdrungen haben, misst, voneinander trennt und einem Analog/Digital-Wandler (50) zum Umwandeln des ersten und zweiten Wellenlängenanteils in erste und zweite digitale Messwerte (X,Y), die den Transmissionsgrad bei der ersten und zweiten Wellenlänge beschreiben, zuleitet, wobei das Auswertesystem (41) einen Quotienten aus den ersten und zweiten digitalen Messwerten (X,Y) und die erste Ableitung dieses Quotienten bildet, wobei die entsprechenden Messgrössen (X) und (Y) ortsabhängig bei der Relativbewegung zwischen Probenbehältern (30,35,45) und optischem Kanal (9) ermittelt werden, so dass über die Ableitung des Quotienten nach der entsprechenden Ortskoordinate die Position einer Grenzfläche zwischen zwei Phasen oder Dichtebereichen einer Probe oder der Füllstand in einem Probenbehälter ermittelt wird.

11. Verfahren nach Anspruch 10, **dadurch gekennzeichnet, dass** die Position einer Grenzfläche Innerhalb der Probe (21) in dem Probenbehälter (30,35,45) durch das Auswerten des ersten und zweiten Nulldurchganges dieser Ableitung des Quotienten aus den ersten und zweiten digitalen Messwerten (X,Y) nach der entsprechenden Ortskoordinate ermittelt wird.

12. Verfahren nach Anspruch 10, **dadurch gekennzeichnet, dass** der Füllstand der Probe (21) in dem Probenbehälter (30,35,45) durch Auswerten der zweiten Ableitung des Quotienten aus den ersten und zweiten digitalen Messwerten (X,Y) nach der entsprechenden Ortskoordinate ermittelt wird.

13. Verfahren nach einem der Ansprüche 10 bis 12, **dadurch gekennzeichnet, dass** zum Trennen des ersten und des zweiten Wellenlängenanteils eine Demodulation durchgeführt wird.

14. Verfahren nach einem der Ansprüche 10 bis 13, **dadurch gekennzeichnet, dass** zum Erzeugen der Lichtwelle zwei Leuchtdioden oder Laserdioden mit zwei Rechtecksignalen angesteuert werden.

15. Verfahren nach einem der Ansprüche 10 bis 14, **dadurch gekennzeichnet, dass** vor dem Trennen des ersten und des zweiten Wellenlängenanteils ein Vorverstärkungsschritt ausgeführt wird, wobei vorzugsweise eine-dynamische Anpassung der Vorverstärkung erfolgt, um Intensitätsschwankungen Rechnung zu tragen.

16. Verfahren nach einem der Ansprüche 10 bis 15, **dadurch gekennzeichnet, dass** vor dem Schritt zum Ermitteln der ersten Ableitung ein Suchfenster definiert wird, um einen Teil der Quotienten von der Ermittlung der ersten Ableitung auszuschliessen.

**17.** Verfahren zum Ermitteln einer Grenzfläche innerhalb einer Probe (21), die sich in einem Probenbehälter (30,35,45) befindet, nach einem der Ansprüche 10 oder 11, **dadurch gekennzeichnet, dass** das Verfahren automatisch ausgeführt und die Position der Grenzfläche ausgegeben wird, vorzugsweise auf einem Bildschirm oder einem Drucker.

**18.** Verfahren zum Ermitteln des Füllstandes einer Probe (21), die sich in einem Probenbehälter (30,35,45) befindet, nach Anspruch 12, **dadurch gekennzeichnet, dass** das Verfahren automatisch ausgeführt und der Füllstand der probe ausgegeben wird, vorzugsweise auf einem Bildschirm oder einem Drucker.

**19.** Computerprogrammprodukt zum Steuern einer Vorrichtung zum Durchführen von Transmissionsmessungen an Probenbehältern (30,35,45), welche ein Uchtsystem (42,43,44) mit einem optischen Kanal (9) zum Erzeugen und Leiten einer Lichtwelle, eine Bewegungseinheit zum relativen Bewegen von Probenbehältern und optischem Kanal (9) zueinander, einen Detektor (22,47) zum Erfassen des die Probenbehälter durchdringenden Lichtes und ein Auswertesystem (41) zum Auswerten der Messresultate umfasst, **dadurch gekennzeichnet, dass** das Lichtsystem (42,43,44) zwei Lichtquellen und eine optische Vorrichtung (4,5) zum Mischen und Einspeisen dieses Lichts mit einem ersten und einem zweiten Wellenlängenanteil in den optischen Kanal (9) umfasst, wobei das im Auswertesystem (41) aktivierte Computerprogrammprodukt die relative Bewegung von Probenbehältern und optischem Kanal (9) zueinander steuert, wobei der Detektor (22,27) als Empfänger zum Messen und Trennen des ersten und des zweiten Wellenlängenanteils der Lichtwelle, welche den Probenbehälter (30,35,45) mit Probe (21) am gleichen Ort, durchdrugen haben, einen Analog/Digital-Wandler (50) zum Umwandeln des ersten und zweiten Wellenlärigenanteils in erste und zweite digitale Messwerte (X,Y), die den Transmissionsgrad bei der ersten und zweiten Wellenlänge beschreiben, umfasst, und wobei das im Auswertesystem (41) aktivierte Computerprogrammprodukt das Auswertesystem (41) befähigt, einen Quotienten aus den ersten und zweiten digitalen Messwerten (X,Y) und die erste Ableitung dieses Quotienten zu bilden, wobei die entsprechenden Messgrössen (X) und (Y) ortsabhängig bei der Relativbewegung zwischen Probenbehältern (30,35,45) und optischem Kanal (9) ermittelt werden, so dass die Ableitung des Quotienten nach der entsprechenden Ortskoordinate so erfolgt, dass die Position einer Grenzfläche zwischen zwei Phasen oder Dichtebereichen einer Probe oder der Füllstand in einem Probenbehälter ermittelt werden.

**20.** Computerprogrämmprodukt nach Anspruch 19, **dadurch gekennzeichnet, dass** das Auswertesystem (41) einen Computer oder einen digitalen Signalprozessor (DSP) umfasst, der durch das aktivierte Computerprogrammprodukt befähigt wird, die Position einer Grenzfläche innerhalb der Probe (21) in dem Probenbehälter (30,35,45) durch das Auswerten des ersten und zweiten Nulldurchganges dieser Ableitung des Quotienten aus den ersten und zweiten digitalen Messwerten (X,Y) nach der entsprechenden Ortskoordinate zu ermitteln.

**21.** Computerprogrammprodukt nach Anspruch 19, **dadurch gekennzeichnet, dass** das Auswertesystem (41) einen Computer oder einen digitalen Signalprozessor (DSP) umfasst, der durch das aktivierte Computerprogrammprodukt befähigt wird, den Füllstand der Probe (21) in dem Probenbehälter (30,35,45) durch Auswerten der zweiten Ableitung des Quotienten aus den ersten und zweiten digitalen Messwerten (X,Y) nach der entsprechenden Ortskoordinate zu ermitteln.

**22.** Computerprogrammprodukt nach einem der Ansprüche 19 bis 21, **dadurch gekennzeichnet, dass** die Vorrichtung zum Durchführen von Transmissionsmessungen an Probenbehältern (30,35,45), durch das in einem Computer oder in einem digitalen Signalprozessor (DSP) aktivierte Computerprogrammprodukt befähigt wird, die Grenzfläche innerhalb einer Probe (21) oder den Füllstand einer Probe (21), die sich in einem Probenbehälter (30,35,45) befindet, automatisch auszuführen und die Position der Grenzfläche bzw. den Füllstand der Probe, vorzugsweise auf einem Bildschirm oder einem Drucker, auszugeben.

**23.** Computerprogrammprodukt nach einem der Ansprüche 19 bis 22, **dadurch gekennzeichnet, dass** es in eine Vorrichtung mit Computer oder digitalem Signalprozessor ladbar ist und umfasst:

a) Modul zum Erfassen der ersten und zweiten digitalen Messwerte (X,Y);
b) Modul zum Bilden des Quotienten aus diesen Messwerten; und
c) Modul zum Ermitteln zumindest der ersten Abteilung dieses Quotienten.

**Claims**

1. Device for performing transmission measurements on sample containers (30,35,45) comprising a light system (42,43,44) with an optical channel (9) for generating and conducting a light wave, a movement unit for relative movement between sample containers and the optical channel (9), a detector (22,47) to measure the light passing through the sample containers and an evaluation system (41) to evaluate the measurement results, **characterized in that** the light system (42,43,44) comprises two light sources and an optical device (4,5) for mixing this light of a first and second wavelength constituent and feeding it into the optical channel (9), the detector (22,27), as receiver for the measurement and separation of the first and second wavelength constituents of the light wave that have passed through the sample containers (30,35,45) with sample (21) at the same place, comprising an analogue/ digital converter (50) to convert the first and second wavelength constituents into first and second digital measurement values (X,Y) which describe the transmission level of the first and second wavelengths, and in which the evaluation system (41) establishes a ratio from the first and second digital measurement values (X,Y) and calculates the first derivative of this ratio, the corresponding measurement values (X) and (Y) being obtained with respect to position during relative movement between the sample containers (30,35,45) and the optical channel (9), so that the derivative of the ratio is obtained from the corresponding spatial coordinates in such a way that this device determines the position of an interface between two phases or density zones of a sample or the filling level in a sample container.

2. Device according to Claim 1, **characterized in that** the light system (42,43,44) comprises two light-emitting diodes and a modulator which modulates the first wavelength constituent and the second wavelength constituent in order to generate the light wave.

3. Device according to Claim 2, **characterized in that** the light-emitting diodes emit light in the near-infrared wavelength range.

4. Device according to any one of the above Claims, **characterized in that** a first light source emits light with a wavelength between 1 200 nm and 1 400 nm and a second light source emits light with a wavelength between 1 000 nm and 1 110 nm.

5. Device according to Claim 4, **characterized in that** the wavelength of the light from the first light source is 1 250 nm or 1 300 nm and the wavelength of the light from the second light source is approximately 1 170 nm.

6. Device according to any one of the above Claims, **characterized in that** the receiver comprises a preamplifier with adjustable amplification factor, preferably connected to the evaluation system.

7. Device according to any one of the above Claims, **characterized in that** the receiver displays a lock-in amplifier for separation of the first and second wavelength constituents by means of demodulation and/or filtering.

8. Device according to any one of the above Claims, **characterized in that** the evaluation system (41) comprises a digital signal processor (DSP) and a memory to store a control code which is used to control the digital signal processor (DSP).

9. Device according to any one of the above Claims, **characterized in that** the evaluation system (41) inputs, stores and evaluates the first digital measurement values (X) and the second digital measurement values (Y).

10. Procedure for characterization of a sample with a device for performing transmission measurements on sample containers (30,35,45) comprising a light system (42,43,44) with an optical channel (9) for generating and conducting a light wave, a movement unit for relative movement between sample containers and the optical channel (9), a detector (22, 47) to measure the light passing through the sample containers and an evaluation system (41) to evaluate the measurement results, **characterized in that** a sample container (30,35,45) with sample (21) is irradiated by a light wave comprising a first and second wavelength constituent generated by two light sources of the light system (42,43,44) and this light with a first and second wavelength is mixed in an optical device (4,5) and fed into the optical channel (9), while the detector (22, 27) measures the light with first and second wavelength constituents that have passed through the sample container (30,35,45) with sample (21) at the same place, separates them and conducts them to an analogue/digital converter (50) to convert the first and second wavelength constituents into first and second digital measurement values (X,Y) which describe the transmission level of the first and second wavelengths, in which the evaluation system (41) establishes a ratio from the first and second digital measurement values (X,Y) and calculates the first derivative of this ratio, the corresponding measurement values (X) and (Y) being obtained with respect to position during relative movement between the sample containers (30,35,45) and the optical channel (9), so that by means of the derivative of the ratio according to the corresponding spatial coordinates, the position of an interface between two phases or density zones of a sample or the filling level in a sample container is obtained.

11. Procedure according to Claim 10, **characterized in that** the position of an interface within the sample (21) in the sample container (30,35,45) is determined by evaluating the first and second zero crossing of this derivative of the ratio of the first and second digital measurement values (X,Y) according to the corresponding spatial coordinates.

12. Procedure according to Claim 10, **characterized in that** the filling level of the sample (21) in the sample container (30,35,45) is determined by evaluating the second derivative of the ratio of the first and second digital measurement values (X,Y) according to the corresponding spatial coordinates.

13. Procedure according to any one of Claims 10 to 12, **characterized in that** for the separation of the first and second wavelength constituents, demodulation is performed.

14. Procedure according to any one of Claims 10 to 13, **characterized in that** to generate the light wave, two light-emitting diodes or laser diodes are actuated by two square wave signals.

15. Procedure according to any one of Claims 10 to 14, **characterized in that** before separation of the first and second wavelength constituents, a preamplification step is performed, in which dynamic matching of the preamplification takes place, in order to accommodate variations in intensity.

16. Procedure according to any one of Claims 10 to 15, **characterized in that** prior to the step for obtaining the first derivative, a search window is defined in order to exclude part of the ratios from calculation of the first derivative.

17. Procedure for determining an interface within a sample (21) contained in a sample container (30,35,45) according to one of Claims 10 or 11, **characterized in that** the procedure is performed automatically and the position of the interface appears as output, preferably to a screen or printer.

18. Procedure for determining the filling level of a sample (21) contained in a sample container (30,35,45) according to Claim 12, **characterized in that** the procedure is performed automatically and the filling level of the sample appears as output, preferably to a screen or printer.

19. Computer program product for control of a device for performing transmission measurements on sample containers (30,35,45) comprising a light system (42,43,44) with an optical channel (9) for generating and conducting a light wave, a movement unit for relative movement between sample containers and the optical channel (9), a detector (22, 47) to measure the light passing through the sample containers and an evaluation system (41) to evaluate the measurement results, **characterized in that** the light system (42,43,44) comprises two light sources and an optical device (4,5) for mixing this light of a first and second wavelength constituent and feeding it into the optical channel (9), in which the computer program product activated in the evaluation system (41) controls the relative movement between the sample containers and the optical channel (9), in which the detector (22,27), as receiver for the measurement and separation of the first and second wavelength constituents of the light wave that have passed through the sample container (30,35,45) with sample (21) at the same place, comprises an analogue/digital converter (50) to convert the first and second wavelength constituents into first and second digital measurement values (X, Y) which describe the transmission level of the first and second wavelengths, and in which the computer program product activated in the evaluation system (41) enables the evaluation system (41) to establish a ratio from the first and second digital measurement values (X,Y) and to calculate the first derivative of this ratio, the corresponding measurement values (X) and (Y) being obtained with respect to position during relative movement between the sample containers (30,35,45) and the optical channel (9), so that the derivative of the ratio is obtained from the corresponding spatial coordinates in such a way that the position of an interface between two phases or density zones of a sample or the filling level in a sample container is obtained.

20. Computer program product according to Claim 19, **characterized in that** the evaluation system (41) comprises a computer or a digital signal processor (DSP) which is enabled by the activated computer program product to determine the position of an interface within the sample (21) in the sample containers (30,35,45) by evaluating the first and second zero crossing of this derivative of the ratio of the first and second digital measurement values (X,Y) according to the corresponding spatial coordinates.

21. Computer program product according to Claim 19, **characterized in that** the evaluation system (41) comprises a computer or a digital signal processor (DSP) which is enabled by the activated computer program product to determine the filling level within the sample (21) in the sample container (30,35,45) by evaluating the second derivative of the ratio of the first and second digital measurement values (X,Y) according to the corresponding spatial coordinates.

22. Computer program product according to any one of Claims 19 to 21, **characterized in that** the device for performing transmission measurements on sample containers (30,35,45) is enabled by the computer program product activated in a computer or digital signal processor (DSP) to determine automatically the position of an interface within the sample (21) or the filling level in a sample (21) contained in a sample container (30,35,45) and to display the position of the interface or the filling level in the sample as output, preferably on a screen or a printer.

23. Computer program product according to any one of Claims 19 to 22, **characterized in that** it can be loaded into a device with a computer or digital signal processor and comprises:

    a) a module to determine the first and second digital measurement values (X,Y);
    b) a module to establish the ratio between these measurement values; and
    c) a module to calculate at least the first derivative of this ratio.

**Revendications**

1. Dispositif de réalisation de mesures de transmission sur des récipients d'échantillons (30,35,45), qui comprend un système optique (42,43,44) comportant un canal optique (9) destiné à générer et guider une onde lumineuse, une unité de déplacement permettant le déplacement relatif des récipients d'échantillons et du canal optique (9) les uns par rapport à l'autre, un détecteur (22,47) destiné à détecter la lumière traversant les récipients d'échantillons et un système d'évaluation (41) destiné à évaluer les résultats des mesures, **caractérisé en ce que** le système optique (42,43,44) comprend deux sources lumineuses et un dispositif optique (4,5) destiné à mélanger et injecter dans le canal optique (9) cette lumière avec une première et une seconde fraction de longueur d'onde, où le détecteur (22,27) en tant que récepteur, pour mesurer et séparer les première et seconde fractions de longueur d'onde de l'onde lumineuse, qui ont traversé le récipient d'échantillon (30,35,45) contenant l'échantillon (21) au même emplacement, comprend un convertisseur analogique/numérique (50) destiné à convertir la première et la seconde fraction de longueur d'onde en premières et secondes valeurs numériques mesurées (X,Y) qui décrivent le degré de transmission concernant les première et seconde longueurs d'onde, et où le système d'évaluation (41) forme un quotient à partir des premières et secondes valeurs numériques mesurées (X,Y) et la dérivée première de ce quotient, où les grandeurs mesurées correspondantes (X) et (Y) sont déterminées en fonction de l'emplacement lors du déplacement relatif entre les récipients d'échantillon (30,35,45) et le canal optique (9), de façon telle que la dérivée du quotient se fait d'après les coordonnées spatiales correspondantes, de telle sorte que le dispositif détermine la position d'une surface limite entre deux phases ou zones de densité d'un échantillon, ou le niveau de remplissage dans un récipient d'échantillon.

2. Dispositif selon la revendication 1, **caractérisé en ce que** le système optique (42,43,44) comprend deux diodes luminescentes et un modulateur, qui module la première fraction de longueur d'onde et la seconde fraction de longueur d'onde pour générer l'onde lumineuse.

3. Dispositif selon la revendication 2, **caractérisé en ce que** les diodes luminescentes émettent de la lumière dans la gamme de longueur d'onde proche des infrarouges.

4. Dispositif selon l'une des revendications précédentes, **caractérisé en ce qu'**une première source lumineuse émet de la lumière ayant une longueur d'onde comprise entre 1 200 nm et 1 400 nm, et **en ce qu'**une seconde source lumineuse émet de la lumière ayant une longueur d'onde comprise entre 1 000 nm et 1 110 nm.

5. Dispositif selon la revendication 4, **caractérisé en ce que** la longueur d'onde de la lumière de la première source lumineuse est de 1 250 nm ou de 1 300 nm et **en ce que** la longueur d'onde de la lumière de la seconde source lumineuse est d'environ 1 070 nm.

6. Dispositif selon l'une des revendications précédentes, **caractérisé en ce que** le récepteur comprend un pré-amplificateur ayant un facteur d'amplification réglable, de préférence avec une entrée vers le système d'évaluation.

**7.** Dispositif selon l'une des revendications précédentes, **caractérisé en ce que** le récepteur présente un amplificateur synchrone destiné à séparer la première et la seconde fractions de longueur d'onde au moyen d'une démodulation et/ou pour le filtrage.

**8.** Dispositif selon l'une des revendications précédentes, **caractérisé en ce que** le système d'évaluation (41) comprend un dispositif de traitement numérique des signaux (DSP) et une mémoire destinée à enregistrer un code de commande qui sert à commander le dispositif de traitement numérique des signaux (DSP).

**9.** Dispositif selon l'une des revendications précédentes, **caractérisé en ce que** le système d'évaluation (41) lit, enregistre et évalue les premières valeurs numériques mesurées (X) et les secondes valeurs numériques mesurées (Y).

**10.** Procédé de caractérisation d'un échantillon avec un dispositif permettant de réaliser des mesures de transmission sur des récipients d'échantillons (30,35,45), qui comprend un système optique (42,43,44) comportant un canal optique (9) destiné à générer et guider une onde lumineuse, une unité de déplacement permettant le déplacement relatif des récipients d'échantillons et du canal optique (9) les uns par rapport à l'autre, un détecteur (22,47) destiné à détecter la lumière traversant les récipients d'échantillons, et un système d'évaluation (41) destiné à évaluer les résultats des mesures, **caractérisé en ce qu'**un récipient d'échantillon (30,35,45) comportant un échantillon (21) est irradié avec une onde lumineuse qui comprend une première et une seconde fraction de longueur d'onde, **en ce que** l'on génère les fractions de longueur d'onde dans deux sources lumineuses du système optique (42,43,44), et **en ce que** l'on mélange dans un système optique (4,5) cette lumière avec une première et une seconde longueur d'onde et on l'injecte dans le canal optique (9), **en ce que** le détecteur (22,27) mesure la première et la seconde fraction de longueur d'onde de l'onde lumineuse qui a traversé au même emplacement le récipient d'échantillon (30,35,45) comportant l'échantillon (21), les sépare et les dirige vers un convertisseur analogique/numérique (50) destiné à convertir les première et seconde fractions de longueur d'onde en premières et secondes valeurs numériques mesurées (X,Y) qui décrivent le degré de transmission pour la première et la seconde longueur d'onde, et où le système d'évaluation (41) forme un quotient à partir des premières et secondes valeurs numériques mesurées (X,Y) et forme la dérivée première de ce quotient, où les grandeurs mesurées correspondantes (X) et (Y) sont déterminées en fonction de l'emplacement lors d'un déplacement relatif entre les récipients d'échantillon (30,35,45) et le canal optique (9), de façon telle que par la dérivée du quotient d'après les coordonnées spatiales correspondantes, on détermine la position d'une surface limite entre deux phases ou deux zones de densité d'un échantillon, ou le niveau de remplissage dans un récipient d'échantillon.

**11.** Procédé selon la revendication 10, **caractérisé en ce que** la position d'une surface limite au sein de l'échantillon (21) dans le récipient d'échantillon (30,35,45) est déterminée par l'évaluation du premier et du second passages à zéro de cette dérivée du quotient des premières et secondes valeurs numériques mesurées (X,Y) d'après les coordonnées spatiales correspondantes.

**12.** Procédé selon la revendication 10, **caractérisé en ce que** l'état de remplissage de l'échantillon (21) dans le récipient d'échantillon (30,35, 45) est déterminé par évaluation de la dérivée seconde du quotient des premières et secondes mesures numériques (X,Y) d'après les coordonnées spatiales correspondantes.

**13.** Procédé selon l'une des revendications 10 à 12, **caractérisé en ce que**, pour séparer la première et la seconde fraction de longueur d'onde, on réalise une démodulation.

**14.** Procédé selon l'une des revendications 10 à 13, **caractérisé en ce que,** pour générer l'onde lumineuse, on commande deux diodes luminescentes ou diodes laser avec deux signaux rectangulaires.

**15.** Procédé selon l'une des revendications 10 à 14, **caractérisé en ce que,** avant la séparation de la première et de la seconde fraction de longueur d'onde, on réalise une étape de pré-amplification, où il se produit de préférence une adaptation dynamique de la pré-amplification pour tenir compte des fluctuations d'intensité.

**16.** Procédé selon l'une des revendications 10 à 15, **caractérisé en ce qu'**avant l'étape permettant de déterminer la dérivée première, on définit une fenêtre de recherche pour exclure une partie des quotients de la détermination de la dérivée première.

**17.** Procédé de détermination d'une surface limite au sein d'un échantillon (21) qui se trouve dans un récipient d'échantillon (30,35,45) selon l'une des revendications 10 ou 11, **caractérisé en ce que** le procédé est réalisé automatiquement et **en ce que** la position de la surface limite est émise en sortie, de préférence sur un écran ou une imprimante.

**18.** Procédé de détermination de l'état de remplissage d'un échantillon (21) qui se trouve dans un récipient d'échantillon (30,35,45), selon la revendication 12, **caractérisé en ce que** le procédé est exécuté automatiquement et **en ce que** l'état de remplissage est émis en sortie, de préférence sur un écran ou une imprimante.

**19.** Produit de programme informatique destiné à commander un dispositif de réalisation de mesures de transmissions sur des récipients d'échantillons (30,35,45) qui comprend un système optique (42,43,44) comportant un canal optique (9) destiné à générer et guider une onde lumineuse, une unité de déplacement permettant le déplacement relatif de récipients d'échantillons et du canal optique (9) les uns par rapport à l'autre, un détecteur (22,47) destiné à détecter la lumière traversant les récipients d'échantillons, et un système d'évaluation (41) destiné à évaluer les résultats des mesures, **caractérisé en ce que** le système optique (42,43,44) comprend deux sources lumineuses et un dispositif optique (4,5) destiné à mélanger et injecter cette lumière ayant une première et une seconde fraction de longueur d'onde dans le canal optique (9), où le produit de programme informatique activé dans le système d'évaluation (41) commande le déplacement relatif des récipients d'échantillons et du canal optique (9) les uns par rapport à l'autre, où le détecteur (22,27), en tant que récepteur, pour mesurer et séparer la première et la seconde fraction de longueur d'onde de l'onde lumineuse qui a traversé les récipients d'échantillons (30,35,45) comportant l'échantillon (21) au même emplacement, comprend un convertisseur analogique/numérique (50) destiné à convertir la première et la seconde fraction de longueur d'onde en premières et secondes valeurs numériques mesurées $(X, Y)$ qui décrivent le degré de transmission pour les première et seconde longueurs d'onde, et où le produit de programme informatique activé dans le système d'évaluation (41) rend le système d'évaluation (41) apte à former un quotient à partir des premières et secondes valeurs numériques mesurées $(X,Y)$ et la dérivée première de ce quotient, où les grandeurs mesurées correspondantes $(X)$ et $(Y)$ sont déterminées en fonction de l'emplacement lors du déplacement relatif entre les récipients d'échantillon (30,35,45) et le canal optique (9), de façon telle que la dérivée du quotient se fait d'après les coordonnées spatiales correspondantes, de telle sorte que l'on détermine la position d'une surface limite entre deux phases ou deux densités d'un échantillon, ou le niveau de remplissage dans un récipient d'échantillon.

**20.** Produit de programme informatique selon la revendication 19, **caractérisé en ce que** le système d'évaluation (41) comprend un ordinateur ou un dispositif de traitement numérique des signaux (DSP) qui est capable, par le produit de programme informatique activé, de déterminer la position d'une surface limite au sein de l'échantillon (21) dans le récipient d'échantillon (30,35,45) par l'évaluation du premier et du second passages à zéro de cette dérivée du quotient formé à partir des premières et secondes valeurs numériques mesurées $(X,Y)$ d'après les coordonnées correspondantes.

**21.** Produit de programme informatique selon la revendication 19, **caractérisé en ce que** le système d'évaluation (41) comprend un ordinateur ou un dispositif de traitement numérique des signaux (DSP) qui est capable, par le produit de programme informatique activé, de déterminer le niveau de remplissage de l'échantillon (21) dans le récipient d'échantillon (30,35,45) par l'évaluation de la dérivée seconde du quotient formé à partir des premières et secondes valeurs numériques mesurées $(X,Y)$ d'après les coordonnées spatiales correspondantes.

**22.** Produit de programme informatique selon l'une des revendications 19 à 21, **caractérisé en ce que** le dispositif de réalisation de mesures de transmission sur des récipients d'échantillons (30,35,45), par le produit de programme informatique activé dans l'ordinateur ou dans un dispositif de traitement numérique des signaux (DSP), est capable d'exécuter automatiquement la surface limite au sein d'un échantillon (21) ou le niveau de remplissage d'un échantillon (21) qui se trouve dans le récipient d'échantillon (30,35,45), et d'émettre en sortie la position de la surface limite ou du niveau de remplissage de l'échantillon, de préférence sur un écran ou une imprimante.

**23.** Produit de programme informatique selon l'une des revendications 19 à 22, **caractérisé en ce qu'**il peut être chargé dans un dispositif équipé d'un ordinateur ou d'un dispositif de traitement numérique des signaux et comprend :

a) un module permettant de détecter les premières et secondes valeurs numériques mesurées $(X,Y)$ ;
b) un module permettant de former le quotient à partir de ces valeurs mesurées ; et
c) un module permettant de déterminer au moins la dérivée première de ce quotient.

## Fig. 1

## Fig. 2

## Fig. 3

**Fig. 4**

**Fig. 5**

Fig. 6

41

61

RAM

FLASH-
ROM

62

50

A/D

60

51

DSP

64

CS-Logik

65

66

UART

63

RS-232

53

Fig. 7